(19) Europäisches Patentamt
European Patent Office
Office européen des brevets

(11) **EP 2 512 706 B1**

(12) **FASCICULE DE BREVET EUROPEEN**

(45) Date de publication et mention de la délivrance du brevet:
**18.09.2013 Bulletin 2013/38**

(21) Numéro de dépôt: **10807601.9**

(22) Date de dépôt: **16.12.2010**

(51) Int Cl.:
***B21K 1/30*** *(2006.01)*  ***F16D 23/02*** *(2006.01)*

(86) Numéro de dépôt international:
**PCT/FR2010/052764**

(87) Numéro de publication internationale:
**WO 2011/073581 (23.06.2011 Gazette 2011/25)**

(54) **PROCEDE DE FABRICATION, PAR METALLURGIE DES POUDRES, D'UNE COURONNE A CRABOTS**

VERFAHREN ZUR HERSTELLUNG EINER GESINTERTEN SYNCHRON-RING MIT KLAUEN

PROCESS OF THE MANUFACTURE OF A SINTERED CLAW CLUTCH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2009  FR 0959055**

(43) Date de publication de la demande:
**24.10.2012  Bulletin 2012/43**

(73) Titulaire: **Federal Mogul Sintertech
45140 Saint-Jean-De-La-Ruelle (FR)**

(72) Inventeurs:
• **BONNEFOY, Vincent**
  **F-38800 Le Pont De Claix (FR)**
• **EBROUSSARD, Jean-Luc**
  **F-38800 Le Pont De Claix (FR)**

(74) Mandataire: **Thibon, Laurent et al
Cabinet Beaumont
1, rue Champollion
38000 Grenoble (FR)**

(56) Documents cités:
EP-A1- 0 737 540    EP-A1- 2 025 430
FR-A1- 2 183 774    US-B1- 6 680 024

# Description

Domaine de l'invention

La présente invention concerne une couronne à crabots frittée, du type de celles utilisées dans les boîtes de vitesse, et son procédé de fabrication.

Exposé de l'art antérieur

Une boîte de vitesses comprend de nombreuses pièces dont les positions varient lors d'un changement de vitesse pour que l'axe de sortie de la boîte présente un couple adapté à la résistance du mouvement. De telles boîtes de vitesses sont notamment prévues pour l'automobile.

Une boîte de vitesses classique comprend notamment des couronnes à crabots solidaires de pignons fous (soudées ou emmanchées sur ces pignons) et destinées à coopérer avec des baladeurs ou manchons à crabots entraînés en rotation par un arbre de la boîte de vitesses. Cette coopération est réalisée après une étape d'égalisation des vitesses entre l'arbre et le pignon fou, par une étape de verrouillage consistant en un crabotage entre les crabots de la couronne à crabots et ceux du manchon baladeur.

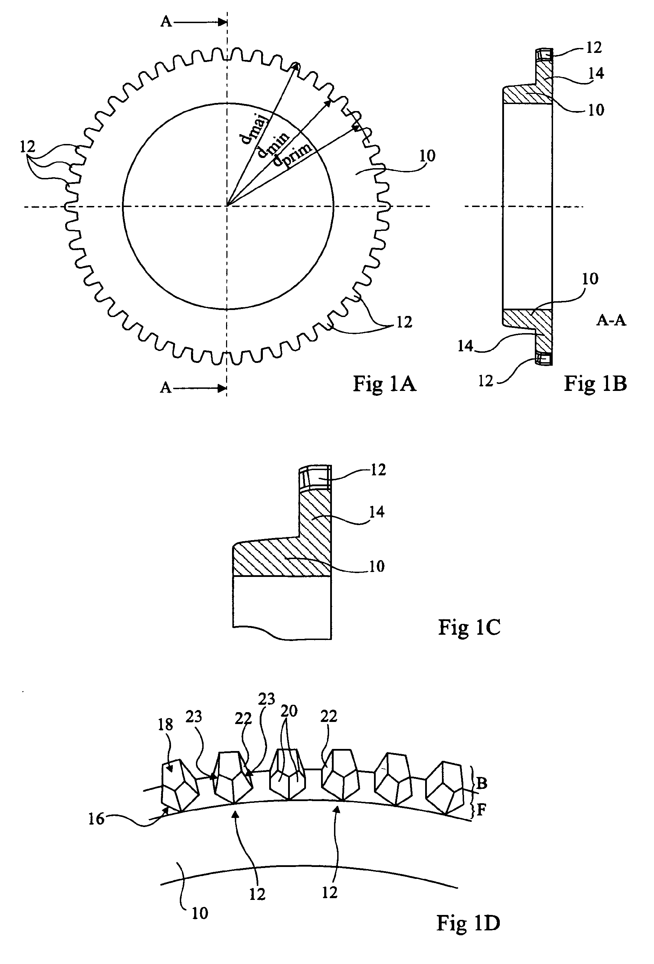

Les figures 1A à 1D représentent, respectivement, une vue de face, une vue en coupe, une vue en coupe partielle agrandie et une vue schématique partielle en perspective d'une couronne à crabots classique.

La couronne à crabots comprend une couronne 10 sur le pourtour de laquelle sont régulièrement répartis des dents ou crabots 12. Comme cela est visible en figure 1B, les crabots 12 sont portés par une zone amincie 14 de la couronne. On notera que les crabots peuvent également être répartis par groupes en périphérie de la couronne.

Comme on le voit mieux en figure 1D, chaque crabot 12 est délimité par une surface de base 16, en contact avec la couronne 10, par une surface supérieure 18 à l'opposé de la surface de base, par deux faces avant 20 dont l'intersection définit une arrête avant ou frontale et par deux faces latérales arrière 22 formant contre-dépouille (en anglais "backtaper"). Les surfaces de base 16 et supérieure 18 ont des formes similaires, constituées d'une portion avant généralement en forme de triangle et d'une portion arrière généralement en forme de trapèze. Chaque crabot 12 s'élargit entre sa surface supérieure 18 et sa surface de base 16, en suivant une évolution qui peut être linéaire mais pas nécessairement. Le plus souvent, cette évolution dessine un profil en développante de cercle pour les faces 22. On appelle diamètre mineur $d_{min}$ le diamètre défini par les surfaces de base 16 et diamètre majeur $d_{maj}$ le diamètre défini par les surfaces supérieures 18. On définit également un diamètre primitif $d_{prim}$, et donc un plan primitif, caractéristique de la denture, positionné entre les diamètres mineur et majeur ($d_{min} < d_{prim} < d_{maj}$). Les géométries caractéristiques d'un crabot sont généralement définies dans le plan primitif.

On appelle F la portion avant ou tête d'un crabot délimitée par les faces avant 20 et par les triangles formant les portions avant des surfaces de base 16 et supérieure 18, cette portion étant la première à entrer en contact lors d'un crabotage. On appelle B la portion arrière ou pied d'un crabot délimité par les faces latérales arrière 22 et par les trapèzes formant les portions arrière des surfaces de base 16 et supérieure 18. L'intersection entre la tête et le pied d'un crabot correspond donc au trapèze défini par des arrêtes 23 entre les faces 20 et 22 et par les droites reliant les intersections des arrêtes 23 avec les surfaces 18, 16 respectivement. La portion arrière B du crabot assure la fonction d'anti-lâcher.

Les crabots représentés en figure 1D sont symétriques par rapport à un plan central longitudinal des crabots. On notera que l'on peut également prévoir des crabots asymétriques, pour lesquels les formes 20 et 22 seraient différentes de part et d'autre de ce plan central longitudinal des crabots.

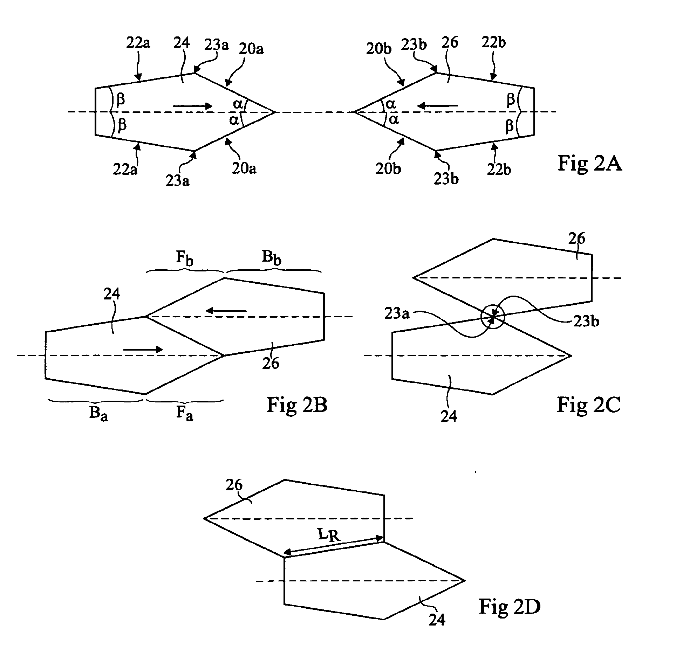

Les figures 2A à 2D sont des vues schématiques en coupe longitudinale, dans le plan primitif de crabots, illustrant quatre étapes d'un crabotage entre deux crabots 24 et 26 en regard, par exemple des crabots d'une couronne à crabots et d'un manchon baladeur.

Les crabots 24 et 26 comprennent des portions avant, respectivement $F_a$ et $F_b$, délimitées par des faces avant, respectivement 20a et 20b, et des portions arrière, respectivement $B_a$ et $B_b$, délimitées par des faces latérales arrière, respectivement 22a et 22b. On notera que, dans le plan primitif des crabots, on définit généralement des angles $\alpha$ et $\beta$ (représentés en figure 2A), respectivement entre les faces avant 20a et 20b et l'axe central longitudinal des crabots et entre les faces arrière 22a et 22b et ce même axe. Dans le cas d'un crabot asymétrique, on définit alors des angles $\alpha_1$ et $\alpha_2$ et/ou $\beta_1$ et $\beta_2$ différents de part et d'autre de l'axe central longitudinal.

Dans un état initial (figure 2A), le couplage entre les crabots 24 et 26 n'est pas engagé. Les portions avant $F_a$ et $F_b$ des crabots sont situées sensiblement, mais pas obligatoirement, en face l'une de l'autre. Les crabots se rapprochent jusqu'à entrer en contact au niveau de leurs faces avant 20a, 20b (figure 2B). Le coulissement continue jusqu'à ce que les arrêtes d'intersection 23a et 23b entre les faces avant et arrière des crabots soient en vis-à-vis (figure 2C). On définit alors une phase de transition entre l'approche et le verrouillage. Enfin, le couplage est verrouillé (figure 2D) lorsque les faces arrière 22a et 22b des crabots 24 et 26 entrent en contact. On notera que, puisque les crabots ont une forme générale en développante de cercle, le contact entre les crabots 24 et 26 est généralement linéaire ou ponctuel et situé dans le plan primitif des crabots. On appelle longueur de recouvrement $L_R$ la longueur, dans le plan primitif, de contact entre les crabots 24 et 26, à l'étape de la figure 2D (crabotage verrouillé). Cette longueur définit la robustesse du dispositif une fois verrouillé puisqu'elle définit la zone utile au verrouillage des deux pièces entre elles et la zone de transmission du couple entre les deux crabots. La longueur $L_R$ définit ainsi la robustesse de la fonction d'anti-lâcher assurée par l'ensemble couronne à crabots et manchon baladeur.

Pour que les crabots ne continuent pas leur déplacement relatif une fois l'état de la figure 2D obtenue, il est courant de former une butée à l'arrière des crabots.

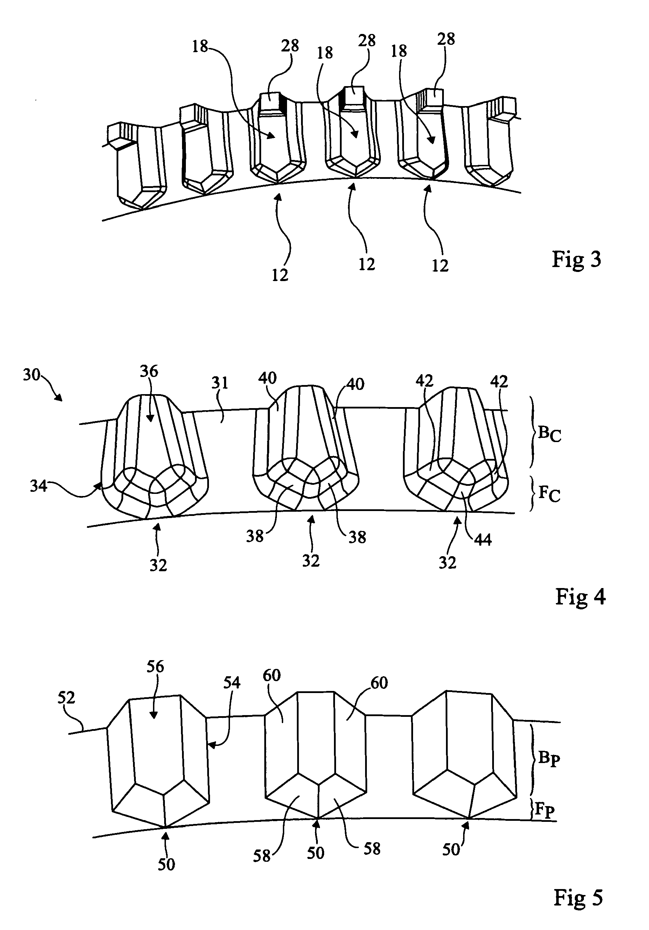

La figure 3 est une vue en perspective d'une portion d'une couronne à crabots dans laquelle de telles butées 28 sont prévues en surface de la partie arrière de crabots. L'effet de butée peut également être obtenu par un contact sur une des faces de la couronne 10 ou de la zone amincie 14. On notera que, dans le cas où des butées 28 sont prévues, la définition des diamètres primitif et majeur ne varie pas, le diamètre majeur étant le diamètre défini par les surfaces supérieures 18 (sans prendre en compte les butées).

Pour former les faces avant et les faces latérales arrière des crabots d'une couronne à crabots, on peut réaliser un usinage sur une préforme constituée d'une couronne comportant des dents en périphérie. Cependant, cet usinage est réalisé pièce par pièce, donc dent par dent, et ne permet pas d'obtenir une précision et une reproductibilité toujours satisfaisantes sur la géométrie des faces 20 et 22, ainsi que sur la position des arrêtes d'intersection 23, pour des applications grande série (fluctuations pièce par pièce, voire dent par dent). De plus, les arrêtes entre portions avant et arrière obtenues par usinage sont généralement vives, ce qui peut provoquer des à-coups lors de l'étape de la figure 2C d'un crabotage et la génération de bavures métalliques.

Pour pallier aux problèmes liés à l'obtention de couronnes à crabots avec usinages des crabots, il a été proposé de former des couronnes à crabots par métallurgie des poudres, à savoir par compression, frittage puis calibrage. Le frittage consiste à chauffer une pièce ébauche formée par compression à froid d'un mélange de poudres afin de lui assurer sa cohésion mécanique. Le calibrage, ou mise en forme par déformation du matériau, consiste à faire passer les pièces frittées dans un moule pour obtenir des cotes et des géométries fonctionnelles plus précises. Ainsi, on obtient directement une pièce aux dimensions souhaitées et le nombre d'étapes à réaliser, ainsi que le coût de fabrication des pièces, sont réduits. Avantageusement, on utilise un moule unique pour former des pièces en grande série, ce qui permet une très bonne reproductibilité pièce par pièce. La qualité géométrique et dimensionnelle des crabots dent à dent est alors liée directement à la qualité de l'outillage.

Pendant le calibrage, deux demi-moules, ou matrices, sont pressés l'un contre l'autre sur la préforme obtenue par frittage. Un inconvénient de cette opération de mise en forme peut être la formation, à la jonction entre les deux demi-moules, à savoir à la jonction entre les portions avant et arrière des crabots, d'une bavure préjudiciable. La présence de cette bavure ne permet pas un crabotage de qualité.

Pour éviter la formation de bavures, le brevet US 6 680 024, sur lequel se base le préambule de la revendication 1, propose d'utiliser un moule dont le demi-moule avant présente, à la jonction avec le demi-moule arrière, une ouverture légèrement plus large que celle du demi-moule arrière. Les faces avant du crabot ainsi formées présentent, à la jonction avec les faces arrière, un épaulement arrondi qui permet un crabotage sans à-coups. Il subsiste cependant un décrochement au début de la portion arrière (zone d'anti-lâcher). Ainsi, le recouvrement des contre-dépouilles de la couronne à crabots et du baladeur ne s'étend que partiellement sur la portion arrière des crabots, ce qui ne permet pas une longueur de recouvrement maximale, optimisée par rapport à la taille des crabots, une fois le crabotage verrouillé.

Ainsi, un besoin existe d'un procédé de fabrication, par métallurgie des poudres, d'une couronne à crabots palliant aux inconvénients susmentionnés pour assurer des fonctionnalités optimales.

Résumé

Un objet d'un mode de réalisation de la présente invention est de prévoir un procédé de fabrication, par métallurgie des poudres, d'une couronne à crabots.

Un autre objet d'un mode de réalisation de la présente invention est de prévoir un moule de calibrage d'une couronne à crabots dimensionné de façon appropriée pour optimiser la longueur de recouvrement des crabots et permettre un crabotage optimisé.

Ainsi, un mode de réalisation de la présente invention prévoit un procédé de fabrication d'une couronne à crabots, chaque crabot étant constitué d'une portion avant et d'une portion arrière, le procédé comprenant les étapes suivantes : former, par compression et par frittage, une couronne sur tout ou partie de la périphérie de laquelle s'étendent des préformes de crabot ; et réaliser un calibrage de la couronne frittée dans un moule comprenant un demi-moule avant et un demi-moule arrière destinés à entrer en contact à la jonction entre les portions avant et arrière des crabots, l'épaisseur d'une portion arrière de chaque préforme, dans le plan primitif des crabots, étant supérieure à la plus petite épaisseur d'une tranchée formée dans le demi-moule arrière et inférieure à la plus grande épaisseur de la tranchée.

Selon un mode de réalisation de la présente invention, les crabots sont répartis sur la périphérie externe de la couronne, le diamètre majeur de la préforme de crabots étant plus faible que le diamètre majeur des demi-moules avant et arrière.

Selon un mode de réalisation de la présente invention, les crabots sont répartis sur la périphérie interne de la couronne, le diamètre mineur de la préforme de crabots étant plus grand que le diamètre mineur des demi-moules avant et arrière.

Selon un mode de réalisation de la présente invention, dans le plan primitif des crabots, l'épaisseur de la portion arrière de chaque préforme est comprise entre la somme des sept huitièmes de l'épaisseur la plus petite et du huitième de l'épaisseur la plus grande de la tranchée, et la somme des sept huitièmes de l'épaisseur la plus grande et du huitième de l'épaisseur la plus petite de la tranchée.

Selon un mode de réalisation de la présente invention, dans chaque plan défini par un diamètre compris entre $d_{min}$ et $d_{maj}$, où $d_{min}$ désigne le diamètre mineur et où $d_{maj}$ désigne le diamètre majeur de la couronne, l'épaisseur de la portion arrière de chaque préforme est comprise entre l'épaisseur la plus petite et l'épaisseur la plus grande de la tranchée dans le plan primitif des crabots.

Selon un mode de réalisation de la présente invention, dans chaque plan défini par un diamètre compris, entre $d_{min}$ et $d_{maj}$, l'épaisseur de la portion arrière de chaque préforme est comprise entre la somme des sept huitièmes de l'épaisseur la plus petite et du huitième de l'épaisseur la plus grande de la tranchée dans ledit plan, et la somme des sept huitièmes de l'épaisseur la plus grande et du huitième de l'épaisseur la plus petite de ladite tranchée dans ledit plan.

Selon un mode de réalisation de la présente invention, le fond du demi-moule avant est arrondi.

Selon un mode de réalisation de la présente invention, les empreintes dans les demi-moules avant et arrière s'étendent de façon à former, en surface des parties arrière des crabots, des butées.

Selon un mode de réalisation de la présente invention, les crabots sont asymétriques par rapport à un plan central longitudinal des crabots.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

les figures 1A à 1D, précédemment décrites, représentent, respectivement, une vue de face, une vue en coupe, une vue en coupe partielle agrandie et une vue schématique partielle en perspective d'une couronne à crabots classique ;

les figures 2A à 2D, précédemment décrites, illustrent différentes phases d'un crabotage ;

la figure 3 est une vue en perspective d'une variante de crabots d'une couronne à crabots ;

la figure 4 est une vue partielle en perspective d'une couronne à crabots selon un mode de réalisation de la présente invention ;

la figure 5 est une vue schématique partielle en perspective d'une préforme de couronne à crabots selon un mode de réalisation de la présente invention ; et

les figures 6A à 6D illustrent, par une vue en perspective et des vues en coupe longitudinale d'un crabot et du moule au niveau de ce crabot, un procédé de calibrage d'une couronne à crabots selon un mode de réalisation de la présente invention.

On notera que, dans la description qui suit, de mêmes éléments ont été désignés par de mêmes références aux différentes figures et, de plus, que les diverses figures ne sont pas tracées à l'échelle.

Description détaillée

Par souci de clarté, seuls les éléments utiles à la compréhension de l'invention ont été représentés et seront décrits. En particulier, la fabrication de la couronne portant les crabots n'a pas été détaillée, l'invention étant compatible avec les techniques usuelles de fabrication d'une telle couronne. Par ailleurs, sauf précision contraire, les qualificatifs latéral, longitudinal, central, etc. sont exprimés arbitrairement dans l'orientation des figures.

On prévoit de former, par compression, frittage puis calibrage, des couronnes dont les crabots présentent des intersections, entre leurs portions avant et arrière, faiblement arrondies (pour casser les angles), permettant une phase de transition minimale lors d'un crabotage. On prévoit de former des crabots présentant une longueur de recouvrement la plus importante possible.

La figure 4 est une vue partielle en perspective d'un mode de réalisation d'une couronne à crabots 30. Dans l'exemple représenté, les crabots sont symétriques par rapport à un plan central longitudinal et sont formés sur tout ou partie de la périphérie d'une couronne 31 (non représentée en totalité).

Chaque crabot 32 comprend une portion avant $F_C$ et une portion arrière $B_C$. Les crabots 32 sont délimités par une surface de base 34, au contact de la couronne 31 (au diamètre mineur), et par une surface supérieure 36 (au diamètre majeur), qui peut être moins étendue que la surface de base. Les surfaces 34 et 36 ont des formes similaires, constituées d'une portion avant en forme de triangle et d'une portion arrière en forme de trapèze. La portion avant $F_C$ est délimitée par deux faces avant 38 et la portion arrière $B_C$ par deux faces latérales arrière 40 formant contre-dépouille. L'intersection 42 entre les portions avant $F_C$ et arrière $B_C$ des crabots 32 est arrondie et l'arrête avant 44, à l'intersection entre les deux faces avant 38, est également arrondie. Optionnellement, un arrondi peut également être prévu entre la surface supérieure 36 et chacune des faces latérales arrière 40.

On notera que la structure représentée en figure 4 n'est qu'un exemple de réalisation et que le procédé présenté ici s'applique à d'autres formes de crabots, notamment à des crabots présentant des arrondis différents de ceux présentés ici (rayons de raccordement entre les surfaces fonctionnelles différents, excepté ceux entre les faces 38 et 40).

Pour former, par métallurgie des poudres, une couronne à crabots telle que celle de la figure 4, on commence par réaliser, par compression et par frittage, une couronne comportant des préformes de crabots en périphérie.

La figure 5 est une vue schématique en perspective d'une telle structure comprenant des préformes de crabots 50 en périphérie d'une couronne 52 (non représentée en totalité).

Dans l'exemple représenté, chaque préforme 50 comprend une portion avant Fp et une portion arrière Bp. Les préformes 50 sont délimitées par une surface de base 54, en contact avec la couronne 52 (au diamètre mineur), et par une surface supérieure 56 (au diamètre majeur), la surface supérieure 56 pouvant être moins étendue que la surface de base 54. Les surfaces de base 54 et supérieure 56 ont des formes identiques, constituées d'un trapèze arrière et d'un triangle avant. Dans l'exemple représenté, et dans les figures qui suivent, les surfaces de base 54 et supérieure 56 ont des portions arrière en forme de rectangle. La portion avant Fp de chaque préforme 50 est délimitée par deux faces 58 dont l'intersection définit une arrête avant et la portion arrière Bp par deux faces latérales 60. Ainsi, la section de la portion arrière Bp de la préforme de crabot 50 est constante sur toute la hauteur (définie dans la direction avant/arrière des crabots) de cette portion. L'angle ou les angles entre les faces avant 58 de la préforme 50 correspondent sensiblement aux angles entre les faces avant 38 des crabots 32 désirés. On notera que la préforme pourra également être prévue avec des arrondis entre les surfaces fonctionnelles, non représentés en figure 5.

Une fois la préforme de la couronne à crabots formée par compression et par frittage, on prévoit de la calibrer, c'est-à-dire de déformer de manière plastique la matière par application de contrainte mécanique, dans un moule aux dimensions adaptées.

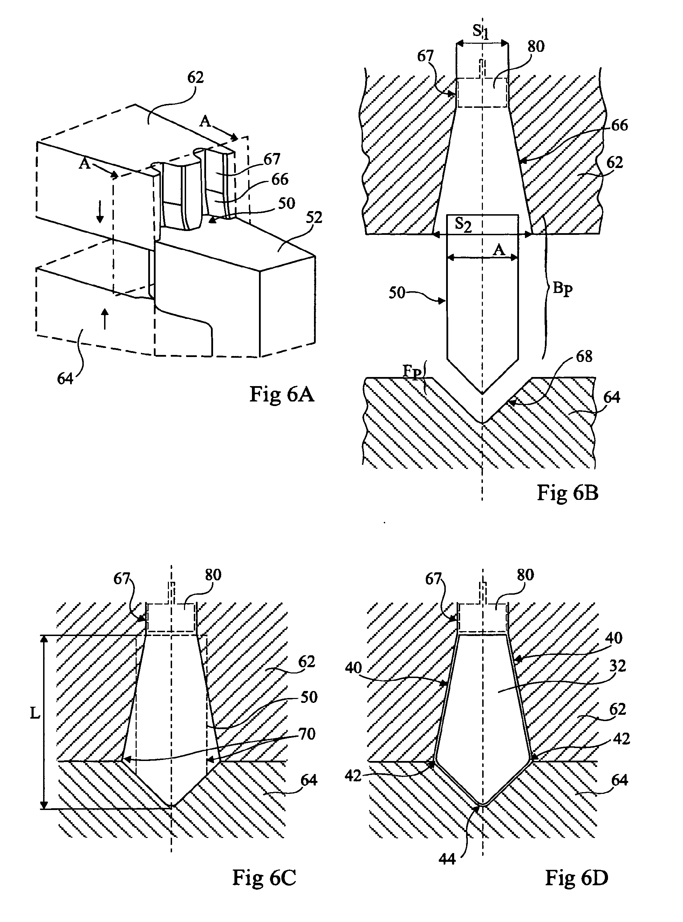

Les figures 6A à 6D illustrent un procédé de calibrage d'une préforme de couronne à crabots selon un mode de réalisation, dans le cas de crabots symétriques. La figure 6A est une vue en perspective pendant le calibrage et les figures 6B, 6C et 6D sont des vues en coupe longitudinale, dans le plan primitif A-A de la figure 6A, qui illustrent, respectivement, une étape initiale du calibrage, une superposition entre le moule que l'on utilise et la préforme de crabot destinée à être calibrée, et une étape finale de la mise en forme (calibrage).

Le moule comporte deux demi-moules ou matrices 62 et 64 destinés à se refermer au niveau de l'intersection entre les portions avant $F_C$ et arrière $B_C$ des crabots 32. Le demi-moule 62 est destiné à former la portion arrière des crabots et le demi-moule 64 à former la portion avant des crabots. Pour chaque crabot, le demi-moule arrière 62 comporte une tranchée 66 évasée selon l'angle final de contre-dépouille ou d'anti-lâcher à réaliser, par exemple d'un angle compris entre 2 et 8°, dont le fond se prolonge pour former une rainure de section constante 67. La rainure 67 forme une ouverture à l'arrière du demi-moule arrière. On appelle $S_1$ l'épaisseur la plus petite de la tranchée 66 (au fond de la tranchée) et $S_2$ l'épaisseur la plus grande de celle-ci (au contact des deux demi-moules 62 et 64), dans le plan primitif A-A. En regard, le demi-moule 64 comprend une empreinte 68 en biseau. L'angle formé par les parois de l'empreinte 68 est égal à l'angle final souhaité. La valeur de l'angle formé par les deux faces avant 58 de la préforme de crabot 50 est prévue pour être de l'ordre de la valeur de l'angle formé par les parois de l'empreinte 68. L'intersection entre les deux faces formant l'empreinte 68 est par exemple arrondie. En variante, un léger plat peut être prévu.

Pour des crabots asymétriques, la tranchée évasée 66 et le biseau 68 sont asymétriques par rapport au plan central longitudinal des crabots.

Comme cela est représenté dans la superposition de la figure 6C, le moule définit un espace libre 70, de part et d'autre de la préforme 50, à l'interface des deux demi-moules 62 et 64, et est plus étroit que la préforme au fond de la tranchée 66. Ainsi, lors du calibrage, la matière constituant l'arrière de la préforme est compressée ou rétreinte et tend dans une certaine mesure à aller dans la rainure 67. Lorsque le rétreint et le mouvement dans la rainure 67 sont suffisants, ils sont bloqués et la matière de l'arrière de la préforme de crabot Bp exerce une pression sur la matière de l'avant de la préforme Fp, ce qui provoque des déplacements de cette matière vers l'espace libre 70.

Pour obtenir la forme désirée, les dimensions du moule et de la préforme respectent la relation suivante :

$$S_1 < A < S_2 \, ,$$

où A désigne l'épaisseur de la portion arrière Bp de la préforme de crabot dans le plan primitif (épaisseur moyenne dans le cas d'une forme trapézoïdale), et de préférence :

$$\frac{7\,S_1}{8} + \frac{S_2}{8} < A < \frac{S_1}{8} + \frac{7\,S_2}{8} \, .$$

Cette relation est de préférence vérifiée dans tout plan de coupe des crabots définis par les diamètres compris entre $d_{min}$ et $d_{maj}$, $d_{min}$ étant le diamètre mineur et $d_{maj}$ le diamètre majeur de la couronne à crabots.

La figure 6D illustre le résultat obtenu après calibrage. Lors du calibrage, l'épaisseur $S_1$ étant inférieure à l'épaisseur A, la matière constituant la portion arrière Bp de la préforme de crabot 50 est comprimée ou rétreinte et presse la préforme de crabot avec l'avant de celle-ci, en direction de l'espace libre 70. De plus, la présence de l'arrondi au sommet du biseau défini par les deux faces de l'empreinte 68 presse la pointe de la portion avant Fp de la préforme 50 et de la matière de l'avant de la préforme se déplace en direction de l'espace libre 70.

Le cumul et le contrôle des deux mouvements de matière décrit ci-dessus permet la formation du crabot 32 dont l'intersection entre les portions avant $F_C$ et arrière $B_C$ est arrondie et ne présente pas de marque, puisque la matière reste en volume légèrement ouvert et ne moule pas strictement la zone de contact entre les moules supérieur et inférieur 62 et 64.

De plus, avantageusement, on forme des crabots ayant une contre-dépouille uniforme, sans marque, totalement fonctionnelle sur toute leur longueur, et donc garantissant une longueur de recouvrement maximale. Ainsi, l'étape de calibrage permet de définir les portions latérales arrière 40 évasées du crabot 32 et leur angle, et il en est de même pour l'angle ou des angles entre les faces avant 38 du crabot.

Pendant le calibrage, qui peut être réalisé à froid ou à chaud, de la matière de la préforme 50 peut migrer légèrement dans la rainure de section constante 67. En fonction de la quantité de matière de la préforme et du volume du moule de calibrage, on peut prévoir de placer un poinçon 80 (en pointillé dans les figures 6B à 6D) dans la rainure 67 pour contrôler cette quantité de matière et, optionnellement, pour réaliser une compression finale de la préforme.

De préférence, pendant le calibrage, un jeu fonctionnel est prévu entre le diamètre majeur $d_{maj}$ de la préforme de crabot et le diamètre majeur $d_{maj}$ des moules 62 et 64. Au final, le diamètre majeur de la denture formée est plus grand que le diamètre majeur de la préforme dans le cas d'une denture externe.

Le procédé décrit permet donc, en une unique étape de calibrage, de former une couronne à crabots dont les crabots ont des arrêtes d'intersection arrondies entre les flancs des parties avant et arrière et présentent une longueur de recouvrement de la zone anti-lâcher maximale.

Des modes de réalisation particuliers de la présente invention ont été décrits. Diverses variantes et modifications apparaîtront à l'homme de l'art. En particulier, on notera que le procédé de calibrage décrit ici pourra également être utilisé pour former des dentures internes d'une couronne. Dans le cas d'une denture interne, on appelle diamètre majeur le diamètre défini par les surfaces de base des crabots et diamètre mineur le diamètre défini par les surface supérieures des crabots (diamètre mineur < diamètre majeur). Ainsi, pour une denture interne, la condition de jeu entre la préforme et les moules porte sur les diamètres mineurs. Un jeu fonctionnel est alors prévu de préférence entre le diamètre mineur de la préforme et le diamètre mineur des moules 62 et 64. Au final, le diamètre mineur de la denture formée est plus petit que le diamètre mineur de la préforme.

De plus, on notera que le procédé décrit ici s'applique à des crabots ayant une forme générale en développante de cercle, mais pas seulement. Il pourra également être appliqué par exemple à des crabots à faces planes. Le procédé s'applique également au cas où les angles caractéristiques des faces avant et arrière ne sont pas constants (profils gauches).

De plus, le procédé présenté ici s'applique à la formation de toute pièce mécanique comprenant un élément sur lequel sont formés des crabots.

De plus, le procédé présenté ici s'applique également à la formation d'une couronne à crabots dans laquelle des butées telles que celles présentées en relation avec la figure 3 sont prévues sur l'arrière de la face supérieure des crabots. Dans ce cas, les demi-moules avant et arrière utilisés lors du calibrage présenteront des empreintes adaptées à la formation de ces butées. Notamment, ils pourront être prévus pour entrer en contact, au niveau des crabots, le long de la délimitation entre la partie avant et la partie arrière des crabots, comme cela a été décrit ci-dessus et, sur les butées, au niveau du contour de la face avant de celles-ci.

**Revendications**

1. Procédé de fabrication d'une couronne à crabots, chaque crabot (32) étant constitué d'une portion avant ($F_C$) et d'une portion arrière ($B_C$), le procédé comprenant les étapes suivante :

   former, par compression et par frittage, une couronne (52) sur tout ou partie de la périphérie de laquelle s'étendent des préformes (50) de crabot ; et
   réaliser un calibrage de la couronne frittée dans un moule comprenant un demi-moule avant (64) et un demi-moule arrière (62) destinés à entrer en contact à la jonction entre les portions avant et arrière des crabots, **caractérisé en ce que** :

   l'épaisseur (A) d'une portion arrière (Bp) de chaque préforme, dans le plan primitif des crabots, est supérieure à la plus petite épaisseur ($S_1$) d'une tranchée (66) formée dans le demi-moule arrière et inférieure à la plus grande épaisseur ($S_2$) de ladite tranchée, dans ledit plan.

2. Procédé selon la revendication 1, dans lequel les crabots sont répartis sur la périphérie externe de la couronne, le diamètre majeur de la préforme de crabots étant plus faible que le diamètre majeur des demi-moules avant (64) et arrière (66).

3. Procédé selon la revendication 1, dans lequel les crabots sont répartis sur la périphérie interne de la couronne, le diamètre mineur de la préforme de crabots étant plus grand que le diamètre mineur des demi-moules avant (64) et arrière (66).

4. Procédé selon l'une quelconque des revendications 1 à 3, dans lequel, dans le plan primitif des crabots, l'épaisseur (A) de la portion arrière de chaque préforme est comprise entre la somme des sept huitièmes de l'épaisseur la plus petite (S₁) et du huitième de l'épaisseur la plus grande (S₂) de la tranchée (66), et la somme des sept huitièmes de l'épaisseur la plus grande et du huitième de l'épaisseur la plus petite de ladite tranchée.

5. Procédé selon l'une quelconque des revendications 1 à 4, dans lequel, dans chaque plan défini par un diamètre compris entre $d_{min}$ et $d_{maj}$, où $d_{min}$ désigne le diamètre mineur et où $d_{maj}$ désigne le diamètre majeur de la couronne, l'épaisseur de la portion arrière de chaque préforme est comprise entre l'épaisseur la plus petite (S1) et l'épaisseur la plus grande (S2) de la tranchée (66) dans ledit plan.

6. Procédé selon la revendication 5, dans lequel, dans chaque plan défini par un diamètre compris entre $d_{min}$ et $d_{maj}$, l'épaisseur de la portion arrière de chaque préforme est comprise entre la somme des sept huitièmes de l'épaisseur la plus petite (S1) et du huitième de l'épaisseur la plus grande (S2) de la tranchée (66) dans ledit plan, et la somme des sept huitièmes de l'épaisseur la plus grande (S2) et du huitième de l'épaisseur la plus petite de ladite (S1) tranchée dans ledit plan.

7. Procédé selon l'une quelconque des revendications 1 à 6, dans lequel le fond du demi-moule avant (64) est arrondi.

8. Procédé selon l'une quelconque des revendications 1 à 7, dans lequel les empreintes dans les demi-moules avant et arrière (64, 62) s'étendent de façon à former, en surface des parties arrière des crabots, des butées.

9. Procédé selon l'une quelconque des revendications 1 à 8, dans lequel les crabots sont asymétriques par rapport à un plan central longitudinal des crabots.

**Patentansprüche**

1. Verfahren zur Herstellung eines Klauenrings, wobei jede Klaue (32) aus einem vorderen Teil ($F_c$) und einem hinteren Teil ($B_c$) geformt ist, wobei das Verfahren folgende Schritte aufweist:

   Formen eines Rings (52) mit Klauenvorformen (50), welche sich über den gesamten Umfang oder einen Teil seines Umfangs erstrecken, durch Komprimieren und Sintern; und Kalibrieren des gesinterten Rings in einer Form, welche eine vordere Halbform (64) und eine hintere Halbform (62) aufweist, die vorgesehen sind, um an der Verbindung zwischen den vorderen und hinteren Teilen der Klauen in Kontakt zu kommen,
**dadurch gekennzeichnet, dass** die Dicke (A) eines hinteren Teils (Bp) von jeder Vorform in der Teilungsebene der Klauen größer ist als der kleinste Abschnitt (S₁) einer Vertiefung (66), die in der hinteren Halbform geformt ist, und kleiner ist als der dickste Abschnitt (S₂) der Vertiefung in der Ebene.

2. Verfahren nach Anspruch 1, wobei die Klauen entlang des Außenumfangs des Rings verteilt sind, wobei der Hauptdurchmesser der Klauenvorform kleiner ist als der Hauptdurchmesser der vorderen Halbform (64) und der hinteren Halbform (66).

3. Verfahren nach Anspruch 1, wobei die Klauen entlang des Innenumfangs des Rings verteilt sind, wobei der kleinere Durchmesser der Klauenvorform größer ist als der kleinere Durchmesser der vorderen Halbform (64) und der hinteren Halbform (66).

4. Verfahren nach einem der Ansprüche 1 bis 3, wobei die Dicke (A) des hinteren Teils von jeder Vorform in der Teilungsebene der Klauen zwischen der Summe von sieben Achteln des engsten Abschnittes (S₁) und einem Achtel des dicksten Abschnittes (S₂) der Vertiefung (66) und der Summe von sieben Achteln des dicksten Abschnittes und einem Achtel des engsten Abschnittes der Vertiefung liegt.

5. Verfahren nach einem der Ansprüche 1 bis 4, wobei in jeder Ebene, die durch einen Durchmesser definiert wird, der zwischen $d_{min}$ und $d_{maj}$ liegt, wobei $d_{min}$ den kleinen Durchmesser des Rings definiert, und wobei $d_{maj}$ den größeren Durchmesser des Rings bezeichnet, die Dicke des hinteren Teils von jeder Vorform zwischen dem engsten Abschnitt (S₁) und dem dicksten Abschnitt (S₂) der Vertiefung (66) in der Ebene liegt.

6. Verfahren nach Anspruch 5, wobei in jeder Ebene, die durch einen Durchmesser definiert wird, der zwischen $d_{min}$ und $d_{maj}$ liegt, die Dicke des hinteren Teils von jeder Vorform zwischen der Summe von sieben Achteln des engsten Abschnittes (S₁) und einem Achtel des dicksten Abschnittes (S₂) der Vertiefung (66) in der Ebene und der Summe von sieben Achteln des dicksten Abschnittes (S₂) und einem Achtel des engsten Abschnittes (S₁) der Vertiefung in der Ebene liegt.

7. Verfahren nach einem der Ansprüche 1 bis 6, wobei der Unterteil der vorderen Halbform (64) abgerundet ist.

8. Verfahren nach einem der Ansprüche 1 bis 7, wobei die Musterhohlräume in den vorderen und hinteren Halbformen (64, 62) sich so erstrecken, dass sie Anschläge an der Oberfläche der hinteren Teile der Klauen bilden.

9. Verfahren nach einem der Ansprüche 1 bis 8, wobei die Klauen asymmetrisch bezüglich einer Längsmittelebene der Klauen sind.

**Claims**

1. A method for manufacturing a dog ring, each dog (32) being formed of a front portion ($F_C$) and of a rear portion ($B_C$), the method comprising the steps of:

   forming, by compression and by sintering, a ring (52) having dog preforms (50) extending on all or part of its periphery; and
   calibrating the sintered ring in a die comprising a front half-die (64) and a rear half-die (62) intended to come in contact at the junction between the front and rear portions of the dogs, **characterized in that** the thickness (A) of a rear portion (Bp) of each preform, in the pitch plane of the dogs, is greater than the narrowest section ($S_1$) of a trench (66) formed in the rear half-die and smaller than the thickest section ($S_2$) of said trench, in said plane.

2. The method of claim 1, wherein the dogs are distributed along the external periphery of the ring, the major diameter of the dog preform being smaller than the major diameter of the front (64) and rear (66) half-dies.

3. The method of claim 1, wherein the dogs are distributed along the internal periphery of the ring, the minor diameter of the dog preform being greater than the minor diameter of the front (64) and rear (66) half-dies.

4. The method of any of claims 1 to 3, wherein, in the pitch plane of the dogs, the thickness (A) of the rear portion of each preform ranges between the sum of seven eighths of the narrowest section ($S_1$) and one eighth of the thickest section ($S_2$) of the trench (66), and the sum of seven eighths of the thickest section and of one eighth of the narrowest section of said trench.

5. The method of any of claims 1 to 4, wherein in each plane defined by a diameter ranging between $d_{min}$ and $d_{maj}$, where $d_{min}$ designates the minor diameter and where $d_{maj}$ designates the major diameter of the ring, the thickness of the rear portion of each preform ranges between the narrowest section ($S_1$) and the thickest section ($S_2$) of the trench (66) in said plane.

6. The method of claim 5, wherein, in each plane defined by a diameter ranging between $d_{min}$ et $d_{maj}$, the thickness of the rear portion of each preform ranges between the sum of seven eighths of the narrowest section ($S_1$) and one eighth of the thickest section ($S_2$) of the trench (66) in said plane, and the sum of seven eighths of the thickest section ($S_2$) and of one eighth of the narrowest section ($S_1$) of said trench in said plane.

7. The method of any of claims 1 to 6, wherein the bottom of the front half-die (64) is rounded.

8. The method of any of claims 1 to 7, wherein the pattern cavities in the front and rear half-dies (64, 62) extend to form stops at the surface of the rear portions of the dogs.

9. The method of any of claims 1 to 8, wherein the dogs are asymmetrical with respect to a central longitudinal plane of the dogs.

Fig 1A

Fig 1B

A-A

Fig 1C

Fig 1D

Fig 2A

Fig 2B

Fig 2C

Fig 2D

Fig 3

Fig 4

Fig 5

Fig 6A

Fig 6B

Fig 6C

Fig 6D

**EP 2 512 706 B1**

**Documents brevets cités dans la description**

- US 6680024 B